# FASCICULE DE BREVET EUROPEEN

(11) **EP 1 582 954 B1**
(45) Date de publication et mention de la délivrance du brevet: **29.10.2008**
(21) Numéro de dépôt: 05290645.0
(22) Date de dépôt: 24.03.2005
(51) Int. Cl.: G05B 19/418

(54) **Système de gestion de production et procédé d'alerte correspondant**
Produktionsverwaltungssystem und zugehöriges Verfahren zur Alarmierung
Process administration system and respective alerting method

(30) Priorité: 01.04.2004 FR 0403442
(43) Date de publication de la demande: 05.10.2005
(73) Titulaire: AIRBUS France, 31060 Toulouse (FR)
(72) Inventeur: Catala, Jean-Louis, 32600 L'Isle Jourdain (FR); Lainez, Vincent, 31770 Colomiers (FR)
(74) Mandataire: Santarelli

(56) Documents cités:
- EP-A- 1 139 246
- US-A- 4 803 039
- US-A- 5 864 784
- US-A- 5 969 697
- PATENT ABSTRACTS OF JAPAN vol. 0183, no. 76 (P-1770), 14 juillet 1994 (1994-07-14) & JP 06 103011 A (LUCAS MANAG SYST KK), 15 avril 1994 (1994-04-15)
- TURNELL M DEF Q V ET AL: "An ergonomic study of supervisory control systems from the human-computer interface perspective" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, vol. 1, 14 octobre 1996 (1996-10-14), pages 756-761, XP010206722 ISBN: 0-7803-3280-6

## Description

La présente invention concerne un système de gestion de production dans une unité de production et un procédé d'alerte correspondant.

La présente invention s'applique à toute unité de production gérée à l'aide d'un calendrier des tâches à exécuter, appelé aussi calendrier de travail ou planning, qui a pour but, pour chaque tâche à effectuer, de déterminer l'ordre chronologique de déroulement de ces tâches ainsi qu'une date de début et de fin pour chacune d'entre elles. Ces tâches peuvent être très nombreuses et impliquer un grand nombre de personnes. C'est le cas par exemple dans la construction aéronautique, spatiale, navale mais aussi lors de la construction d'une usine, d'un immeuble, etc.. L'élaboration d'un calendrier de travail est ainsi devenue une véritable science. La méthode sans doute la plus connue pour établir de tels calendriers de travail est la méthode du chemin critique plus communément connue sous le sigle PERT (Program Evaluation and Review Technic ou technique d'évaluation et de révision des programmes).

De telles méthodes d'élaboration de calendriers de travail permettent une gestion en amont mais ne prévoient pas de moyens pour éviter, ou tout du moins limiter, des dérives par rapport au calendrier initial lors de la production.

Lorsqu'un problème technique survient au cours du déroulement d'une tâche, ce problème est pris en charge par la personne qui le découvre. Elle en informe par exemple le chef du poste de travail correspondant, Selon l'importance du problème, l'information est ensuite retransmise à un bureau des méthodes qui assure le support technique de tout ou partie de l'unité de production et/ou au bureau d'études qui a conçu la pièce, ou l'ensemble, sur laquelle le problème technique est apparu. Une fois la solution trouvée, elle est retransmise au niveau du poste de montage et l'opération technique pour laquelle le problème s'est posé peut enfin être réalisée.

Pour permettre un suivi de la production, des saisies informatiques ou manuelles des dates de début et de fin des diverses tâches, des problèmes techniques éventuellement rencontrés, des solutions apportées peuvent être réalisées. Il est alors possible, au niveau d'un service de gestion de production de visualiser et d'éditer sur papier toutes les informations saisies.

Le document EP-1 139 246 concerne la planification d'éventualités dans un processus d'ordonnancement. Dans ce document, des tâches telles des travaux de réparation sur un système de télécommunication doivent être exécutés par plusieurs ressources telles des ingénieurs de terrain dans différents lieux d'une zone géographique. Ces tâches sont planifiées au moyen d'un agent de planification dans un serveur gestionnaire de travaux. L'agent de planification fournit des données de planification correspondant à des planifications des tâches que des individus des ressources doivent exécuter à partir de données de tâches concernant les tâches à exécuter et de données de ressources concernant des caractéristiques de ressources disponibles pour exécuter les tâches sur une période donnée. Les tâches planifiées sont affectées de valeurs d'éventualité associées qui sont calculées chacune comme une fonction de la différence entre le moment où une tâche est planifiée pour débuter et le moment de début le plus tard admissible pour ladite tâche. Les données de planification sont téléchargées vers une station de travail. Les données téléchargées sont affichées sur un diagramme de Gantt et des blocs de tâches sur le dispositif d'affichage sont codés en couleurs conformément à leur valeur d'éventualité pour donner une indication visuelle de leurs valeurs.

Le document US-5,969,697 décrit un système de contrôle interactif présentant plusieurs écrans d'affichage et comportant plusieurs premiers appareils de contrôle interactif ayant un dispositif de saisie et un périphérique de sortie ainsi qu'un second appareil de contrôle interactif connecté aux premiers appareils de contrôle interactifs. Ce système de contrôle comporte en outre un dispositif d'enregistrement pour enregistrer un attribut des premiers appareils de contrôle interactif, un dispositif d'exécution pour exécuter un procédé d'entrée du dispositif d'entrée des premiers appareils de contrôle interactif vers le second appareil de contrôle interactif basé sur l'attribut et un dispositif de sélection de sortie pour sortir le résultat d'exécution du procédé d'entrée par ledit dispositif d'exécution de procédés vers le périphérique de sortie des premiers appareils de contrôle interactifs correspondant à l'attribut.

On remarque que, malgré la mise en oeuvre de moyens de communication modernes (téléphone, courrier électronique, ...), qui permettent une transmission rapide de l'information, les temps de transmission de l'information sont relativement longs au sein d'un groupe de production donné et sont dommageables notamment lorsque le problème survient au cours d'une tâche se trouvant sur un chemin critique d'un calendrier de travail.

La présente invention a alors pour but de fournir un système permettant d'accélérer la transmission de toute information concernant tout problème survenant lors de l'exécution d'une tâche planifiée sur un calendrier de travail afin de retarder le moins possible la production correspondante.

A cet effet, le système qu'elle propose est un système de gestion de production pour une unité de production pour laquelle un calendrier des tâches à accomplir est établi et mémorisé dans un dispositif de gestion centralisé,
ledit système comportant des dispositifs électroniques individuels associés chacun à un opérateur, des postes de contrôle comportant des moyens de saisie et de visualisation et un réseau reliant ces dispositifs électroniques individuels et les postes de contrôle au dispositif de gestion centralisé,
système dans lequel chaque dispositif électronique individuel comporte d'une part des moyens de saisie pour la saisie des tâches effectuées et de problèmes rencontrés éventuellement lors de l'exécution de ces tâches par l'opérateur associé et d'autre part des moyens de transmission des informations saisies vers le dispositif de gestion centralisé, et
système dans lequel le dispositif de gestion centralisé comporte d'une part des moyens de comparaison entre les informations reçues de la part des divers dispositifs électroniques individuels et le calendrier des tâches à accomplir mémorisé et d'autre part des moyens pour générer une alerte lorsque les moyens de comparaison ont détecté un écart entre les informations reçues et le calendrier des tâches (EQ) à accomplir dépassant un seuil prédéterminé et mémorisé.

Selon l'invention le dispositif de gestion centralisé comporte en outre des moyens de transmission d'une telle alerte vers les dispositifs électroniques individuels et les postes de contrôle ;
une partie au moins des dispositifs électroniques individuels et des postes de contrôle comportent des moyens de visualisation permettant de visualiser des signaux d'alerte concernant non seulement l'opérateur associé au dispositif électronique individuel ou au poste de contrôle mais aussi d'autres opérateurs et d'autres postes de contrôle, et
ledit système comporte au moins un écran relié au réseau et comportant des moyens d'affichage présentant des moyens de défilement d'une image illustrant le calendrier des tâches, les moyens d'affichage étant des moyens d'affichage en deux dimensions et pour l'une des deux dimensions l'échelle utilisée variant.

Un tel système permet la circulation de l'information au sein de toute une unité de production. L'information est alors disponible à chacun et également en de nombreux endroits géographiques de cette unité. Une personne qui n'est donc pas à son poste peut également être informée. De plus, ce système permet une information en temps réel de tous les acteurs intéressés, ou tout du moins une partie d'entre eux.

D'autres signaux d'alertes peuvent être générés par le dispositif central de gestion. On peut ainsi prévoir que lorsqu'une tâche doit commencer à la suite d'une autre, dès que la première tâche est achevée, une alerte est déclenchée par le dispositif central de gestion. Des alertes peuvent aussi être générées lorsqu'un problème technique, une pièce manquante, un problème de qualité, etc. est signalé.

Pour améliorer la communication et la diffusion de l'information, le système comporte au moins un écran, avantageusement de grandes dimensions, associé à des moyens d'affichage et relié au réseau. Un tel écran, lorsqu'il est placé à un endroit de passage, au "centre de gravité" du groupe de production concerné, permet de diffuser l'information à toutes les personnes qui le consulte. Cette consultation peut alors se faire automatiquement lors d'un passage devant l'écran. Ce dernier permet à tout le monde, tant les personnes du groupe de production concerné que des personnes étrangères à ce groupe, de connaître l'avancement du travail.

Pour que l'affichage sur cet écran soit toujours à jour et d'actualité, les moyens d'affichage comportent des moyens de défilement d'une image illustrant le calendrier des tâches. On peut imaginer ici par exemple un curseur se déplaçant sur l'écran ou un curseur fixe et un calendrier des tâches défilant derrière le curseur. Pour s'adapter au temps qui s'écoule, les moyens d'affichage sont des moyens d'affichage en deux dimensions, et que pour l'une des deux dimensions l'échelle utilisée varie. La dimension présentant une échelle variable est de préférence la dimension correspondant à l'axe des temps. On peut prévoir que l'échelle variable est maximale au centre de l'écran et décroît vers les bords de l'écran. Si l'échelle variable concerne l'axe des temps, alors les tâches actuelles sont représentées à grande échelle et que les tâches écoulées et à venir sont représentées à échelle réduite. Ceci permet alors une meilleure lisibilité de l'écran en mettant en avant l'information actuelle et en la valorisant par rapport au reste de l'information.

Dans ce système, les dispositifs électroniques individuels sont de préférence des dispositifs portables sans fil, de type ordinateur portable. De cette manière, ils peuvent suivre l'opérateur et celui-ci n'est pas obligé de regagner un endroit prédéterminé soit pour consulter des informations, soit pour en saisir. De tels dispositifs, que l'on peut qualifier de nomades, suivent ainsi l'opérateur de la même manière que dans l'état de l'art les gammes le suivaient sur son lieu de travail. Ces dispositifs nomades sont de taille adaptée aux tâches attribuées à l'opérateur. Il peuvent présenter par exemple la taille d'un agenda électronique s'il est préférable que l'opérateur puisse le glisser dans sa poche ou bien la taille d'une ardoise électronique si des plans techniques doivent être affichés par exemple. On peut également prévoir une base fixe et un écran, de préférence interactif, mobile. L'écran peut aussi être un écran fixe.

Pour plus d'interactivité et de manière à rendre le système dynamique, le dispositif de gestion centralisé comporte avantageusement des moyens de saisie permettant de modifier le calendrier des tâches mémorisé. En fonction ainsi d'avance ou de retard constatés, il est possible d'adapter le calendrier des tâches à la nouvelle situation.

Les moyens d'affichage du système selon l'invention permettent avantageusement l'affichage d'un curseur et sont associés à un dispositif de commande de déplacement de ce curseur, tel par exemple une souris d'ordinateur. De tels moyens permettent une interactivité entre l'écran et un opérateur. Ainsi par exemple, si le système d'alerte comporte en outre des moyens d'affichage d'informations complémentaires lorsque le curseur est positionné sur une zone de l'écran, l'opérateur peut requérir des informations supplémentaires au système par rapport aux informations affichées.

La présente invention concerne également un procédé de génération d'alertes lors de l'exécution par des opérateurs de tâches planifiées sur un calendrier des tâches, caractérisé en ce qu'il comporte les étapes suivantes :
- préparation et mise en mémoire dans un dispositif de gestion centralisé du calendrier des tâches,
- diffusion par l'intermédiaire d'un réseau à chaque opérateur des tâches qu'il doit accomplir,
- saisie par chaque opérateur des tâches qu'il accomplit et des éventuels problèmes rencontrés,
- transmission par l'intermédiaire du réseau des informations saisies par chaque opérateur au dispositif de gestion centralisé,
- comparaison des informations reçues avec le calendrier des tâches (EQ) mémorisé et détection d'anomalies susceptibles de nuire à la bonne exécution des tâches,
- génération d'une alerte lorsqu'une anomalie est détectée, l'ensemble des alertes générées étant affiché sur un écran de grande taille à proximité de plusieurs postes de travail,
- diffusion à tout le réseau de l'alerte générée, et
- affichage sur l'écran d'un diagramme dont un axe représente l'axe des temps, un curseur se déplaçant sur l'axe des temps, dont l'échelle est variable, pour se placer automatiquement à la date et heure actuelle.

Un tel procédé peut être mis en oeuvre à l'aide d'un système tel que décrit plus haut. Ce procédé permet de faciliter la communication au sein d'un groupe de production et ainsi de limiter les retards pouvant survenir au cours d'une fabrication. Ce procédé permet ainsi d'optimiser la production et de limiter la durée de celle-ci. On réalise de la sorte un gain de temps qui peut être sensible.

Avantageusement, l'ensemble des alertes générées est affiché sur un écran de grande taille à proximité de plusieurs postes de travail. De cette manière tout le monde passant à proximité de cet écran peut être informé des alertes en cours. Si cette personne est concernée, elle peut alors agir sur le champ. Pour plus d'efficacité, les tâches à accomplir par tous les opérateurs sont affichées sur l'écran. Une vue globale de l'activité du groupe de production est alors représentée sur l'écran.

Comme suggéré plus haut relativement au système décrit, l'écran affiche par exemple un diagramme dont un axe représente l'axe des temps, et un curseur se déplace sur l'axe des temps pour se placer automatiquement à la date et heure actuelle. Le curseur peut rester sensiblement immobile et sensiblement centré sur l'écran tandis que l'axe des temps s'adapte à la position du curseur.

Dans un procédé tel que décrit ci-dessus, les alertes se présentent par exemple sous la forme de signaux visuels apparaissant sur des moyens de visualisation.

Lorsque les tâches à accomplir par les opérateurs sont affichées à l'écran, on peut prévoir que plusieurs tâches soient regroupées en une famille de tâches, et que chaque famille de tâches soit affichée à l'écran, les tâches d'une famille de tâches affichée n'étant alors plus affichées individuellement. Ceci est particulièrement avantageux lorsque le nombre de tâches à gérer est important. Dans un tel cas, il est possible ainsi d'avoir une vue plus synthétique des tâches.

Pour une vue plus synthétique encore correspondant à plusieurs groupes de production, il peut être envisagé d'afficher des tâches ou familles de tâches correspondant à différents calendriers des tâches simultanément sur un même écran.

En ce qui concerne l'affichage, il peut aussi être envisagé que des informations générales concernant les tâches affichées sont regroupées dans un bandeau affiché sur le même écran. De préférence, des indicateurs sur l'avancement des tâches sont calculés et affichés sur le bandeau. Un tel bandeau est alors un outil très pratique pour le pilotage des tâches concernées.

Pour une meilleure gestion des informations collectées lors de la mise en oeuvre d'un procédé selon l'invention, on peut avantageusement prévoir que les données mémorisées et saisies sont analysées et traitées par un tableur puis éditées sous forme de graphiques. De telles analyses et éditions permettent de mieux pouvoir anticiper des problèmes, de mieux piloter les tâches durant leur exécution et permet aussi en aval d'analyser d'éventuels dysfonctionnements afin d'en tenir compte pour un prochain cycle de fabrication.

Des détails et avantages de la présente invention ressortiront de la description qui suit, faite en référence au dessin annexé sur lequel :
- La figure 1 représente un système selon l'invention
- La figure 2 illustre à l'aide d'un schéma un procédé selon l'invention,
- La figure 3 montre un atelier de montage d'un aéronef dans lequel est tel procédé est mis en oeuvre,
- La figure 4 montre un exemple d'équilibrage,
- La figure 5 représente schématiquement un type d'affichage sur grand écran, et
- Les figures 6, 7A et 7B, 8 et 9 illustrent divers affichages pouvant être réalisés sur un écran.

La présente invention est décrite ici en référence à une chaîne de montage d'un avion 2. Toutefois, elle peut s'appliquer à de nombreux autres domaines. À titre d'exemples non limitatifs, la présente invention peut également s'appliquer à la construction navale, à la construction de satellites, de machines-outils, d'immeubles, d'usines, d'ouvrages d'art (ponts, routes, etc ...).

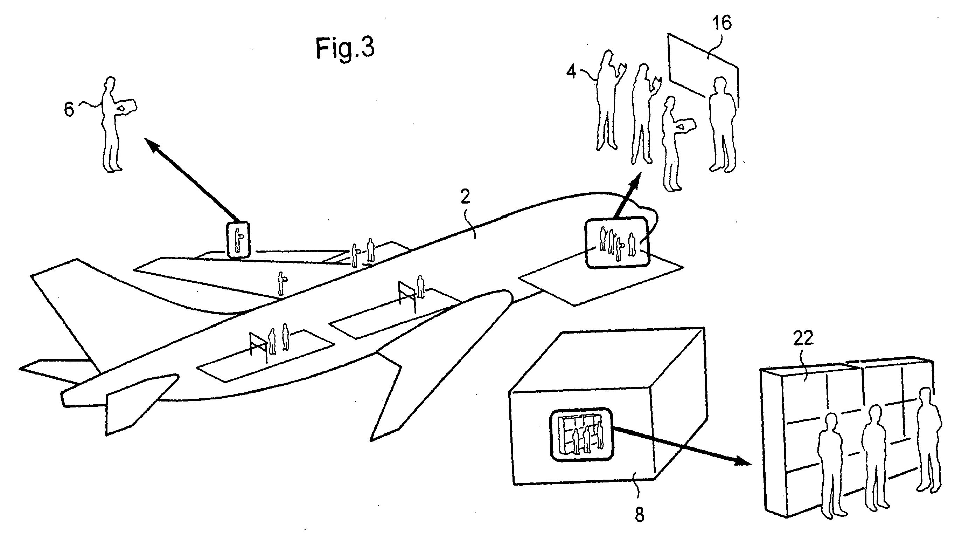

La figure 3 montre l'avion 2 se trouvant dans un atelier de montage. Plusieurs groupes de production sont prévus pour le montage de l'avion. Un groupe de production est par exemple prévu pour l'assemblage des tronçons de l'avion et un autre pour la mise en place de câbles électriques. Chaque groupe de production est constitué d'une part d'une équipe de montage 4 qui comprend plusieurs agents de fabrication 6 autour de l'avion 2 pour la réalisation d'un travail prédéterminé et d'autre part d'un support métier 8 qui comprend les personnes assistant les agents de fabrication 6 dans leur travail. Les personnes constituant le support métier 8 sont représentées dans un local à l'extérieur de l'atelier de montage, à proximité de l'avion 2. Elles supervisent par exemple la qualité du travail des agents de fabrication 6 lors de l'exécution de leurs tâches en contrôlant notamment le travail réalisé par l'équipe de montage 4. Le support métier 8 comporte par exemple également un support technique assurant l'assistance technique du groupe de production correspondant et un support logistique gérant l'approvisionnement en pièces nécessaires pour réaliser les opérations effectuées par les agents de fabrication 6.

L'équilibrage d'un groupe de production est un outil ayant pour objectif d'ordonnancer au mieux les tâches, ou opérations, à effectuer, et ce en fonction du cycle, des effectifs, des contraintes et des ressources disponibles. Cet ordonnancement des tâches est indispensable pour optimiser l'utilisation du potentiel humain et matériel, obtenir un flux de production régulier et stable, réduire les cycles de fabrication des produits, aider à la planification des charges de travail et la détermination des délais de fabrication, prévoir les effectifs à engager, éviter la saturation des postes en termes de moyens et d'effectifs, informer l'atelier de l'enclenchement des opérations à réaliser par la diffusion de graphiques, coordonner ce travail des différentes équipes de montage et suivre l'avancement des travaux.

Cet équilibrage est alors la représentation graphique d'un ensemble de tâches constituant une station de montage ou similaire dans un cycle donné ou intervalle de production. Une chaîne d'assemblage est constituée d'un certain nombre de stations de montage situées à des positions physiques bien définies par rapport à l'avion 2. Une station de montage correspond à une somme de gammes opératoires qui sont opérées par une équipe de montage 4. À chaque station est associée un certain nombre de travaux à effectuer dans un temps donné appelé cycle ou intervalle de production.

Les tâches à effectuer pour assembler un élément, un avion, ... sont définies dans les gammes opératoires et leurs opérations. Une gamme est définie par un ensemble de données, dont les plus importantes sont : sa référence qui l'identifie de façon unique, son libellé qui la décrit sommairement, sa charge au rang de référence (rang 100), son coefficient de décroissance et un ou plusieurs groupes de production.

Des contraintes temporelles entre tâches peuvent être définies. On peut ainsi, à titre d'exemples illustratifs, avoir des contraintes d'exclusion mutuelle entre deux tâches, des contraintes d'antériorité (ou de succession), des contraintes de calage imposant à une tâche de commencer (ou finir) exactement au même moment qu'une autre, ou encore de commencer dès la fin d'une autre tâche.

La réalisation d'un équilibrage doit prendre en compte les différentes ressources disponibles et nécessaires à l'exécution et à la gestion d'une tâche. Parmi ces ressources il y a bien entendu les agents de fabrication 6. Chacun d'eux appartient à un métier (par exemple monteur, électricien, ...). Un même agent de fabrication 6 peut avoir une ou plusieurs compétences ou qualifications. Il y a également les moyens qui sont les dispositifs, les infrastructures, les outils au sens général nécessaires à l'exécution d'une tâche. Enfin il faut tenir compte des zones géographiques d'un poste qui sont en général des surfaces au sol qui peuvent être libres ou occupées par un outillage et les zones du produit qui sont des espaces géographiques du produit (une zone dans l'avion par exemple). Une zone peut avoir une capacité maximale en terme de nombre d'agents de fabrication ou de moyens pouvant l'occuper pendant une durée. Elle peut être déclarée zone interdite pendant l'exécution d'une tâche, ce qui implique l'interdiction d'affecter un agent de fabrication sur cette zone pendant l'exécution d'une autre tâche.

Il n'existe pas de loi mathématique exacte pour établir un équilibrage. Celui-ci est alors réalisé par des méthodes traditionnelles fondées sur l'expérience humaine. Pour réaliser un équilibrage, il convient d'établir la liste des tâches qui seront exécutées sur la station de montage concernée, définir les effectifs par métier nécessaires à la station de montage, déterminer l'ordonnancement de ces tâches, en affectant à chacune d'elles un ou plusieurs agents de fabrication, tout en respectant une bonne qualité d'organisation du travail, affecter les ressources, répartir les tâches dans les différentes stations de montage de la chaîne de montage et enfin représenter graphiquement l'ordonnancement des tâches en construisant un diagramme de type diagramme de GANTT (du nom de Henry L. Gantt : il permet de représenter les besoins d'un projet en ressources en fonction du temps par l'intermédiaire d'une liste de tâches représentées par des barres horizontales). La technique connue sous le nom PERT (Program Evaluation and Review Technic ou technique d'évaluation et de révision des programmes) peut être utilisée ici.

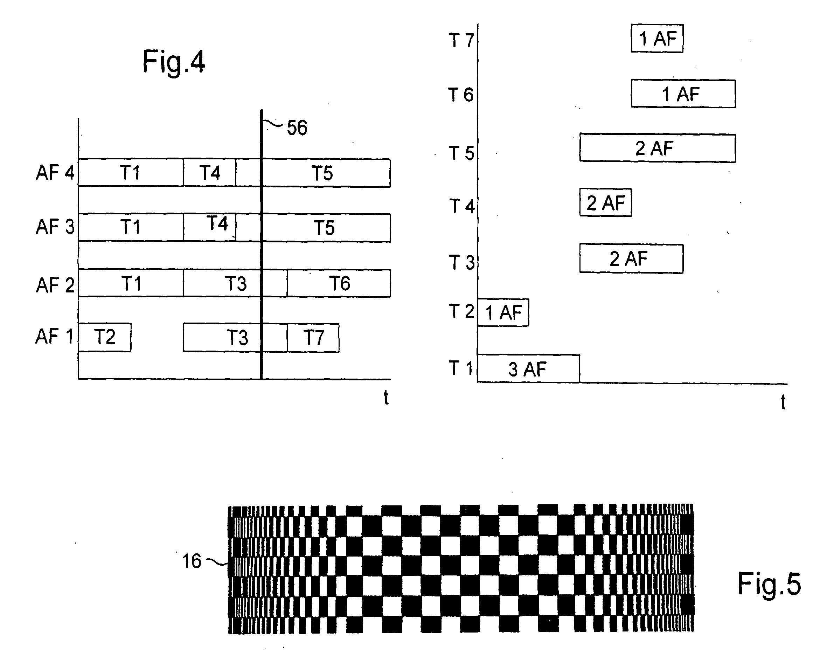

La figure 4 montre à titre d'exemple un équilibrage pour sept tâches réparties entre quatre agents de fabrication. Le diagramme de gauche de cette figure indique pour chaque agent de fabrication les tâches qu'il doit effectuer et le diagramme de droite indique la répartition des tâches dans le temps en précisant le nombre d'agents de fabrication nécessaires pour réaliser chacune des tâches.

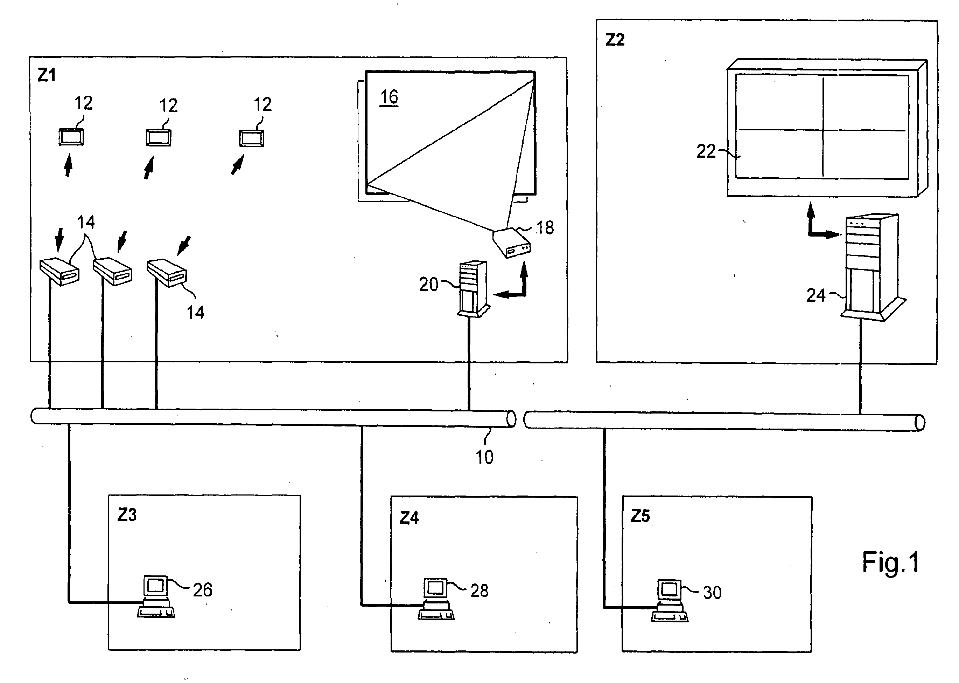

La figure 1 représente un système selon l'invention destiné à la gestion de la production dans l'atelier de montage décrit ci-dessus. Ce système est représenté sur cette figure en fonction des zones de production dans lesquelles il se trouve. Les divers composants de ce système sont reliés entre eux par un réseau 10.

Dans la zone de montage Z1 évoluent notamment les agents de fabrication 6. Chaque agent de fabrication a à sa disposition un écran déporté 12 relié par une liaison sans fil à une unité centrale 14 correspondante, elle même raccordée au réseau 10.

Chaque agent de fabrication doit retrouver sur son écran déporté 12 les informations dont il a besoin pour effectuer la tâche qui lui est confiée. Ainsi il peut notamment lire sur cet écran les indications de l'équilibrage qui le concerne.

L'agent de fabrication reçoit donc ainsi des informations mais il a aussi pour mission d'informer le système sur l'état d'avancement de sa tâche. Il indique notamment en temps réel la date à laquelle il débute sa tâche et la date à laquelle il l'achève. Il doit saisir également tout problème technique qu'il rencontre et signaler dès qu'il lui manque une pièce ou un outil nécessaire à l'accomplissement de sa tâche.

Les moyens techniques mis ici à la disposition de l'agent de fabrication peuvent être de diverses natures. Il peut par exemple s'agir d'un ordinateur de type portable relié au réseau par une liaison de préférence sans fil. Cet outil permet de recevoir et d'envoyer des informations. Il peut également s'agir uniquement d'un écran mobile (sans fil) associé à une base fixe (reliée par un fil au réseau). L'écran peut être un écran interactif permettant la saisie de données ou bien on peut prévoir que l'écran ne sert qu'à la lecture d'informations tandis que les données sont saisies par l'agent de fabrication au niveau de la base fixe. La taille de l'écran peut être choisie en fonction par exemple de la tâche accomplie par l'agent de fabrication. Si ce dernier se déplace beaucoup, un format de poche est préférable. Si par contre il opère sa tâche en restant sensiblement toujours au même endroit, un écran de plus grande taille, donc plus confortable, est préférable et prend alors place à proximité de l'agent de fabrication.

Dans la zone de montage Z1 se trouve également un écran géant 16. Un vidéo projecteur 18, commandé par une unité centrale 20 reliée au réseau 10, réalise l'affichage sur l'écran géant 16 notamment de l'équilibrage du groupe de production auquel appartiennent les agents de fabrications travaillant à proximité. Cet écran géant 16 est placé à un endroit de passage de manière à être visible de tous. Cet écran est de préférence de grande taille, par exemple 4 m x 2 m, pour permettre d'une part d'y mettre un grand nombre d'informations et d'autre part que ces informations soient facilement lisibles. La taille de l'écran est adaptée au nombre d'informations à y afficher. Dans certaines applications, il est envisageable d'avoir des écrans de dimension moyenne (30 à 40") ou de taille classique (inférieure à 30").

Techniquement, ce grand écran 16 peut être par exemple un mur d'images. Il peut être constitué de plusieurs écrans accolés les uns aux autres de manière à former un écran de plus grande taille. Il est toutefois préférable pour une meilleure lisibilité d'avoir un seul écran. Une technologie LCD peut également être envisagée.

À l'écart de la zone de montage Z1 se trouve une zone Z2 pour les supports métiers 8. On retrouve dans cette zone Z2 un écran de contrôle 22, qui est par exemple un assemblage de quatre écrans de type écran plasma, et dont l'affichage est commandé par une unité centrale 24 reliée au réseau 10.

La figure 1 représente également trois autres zones appelées Z3, Z4 et Z5 qui correspondent par exemple à trois niveaux hiérarchiques. La zone Z3 correspond par exemple au responsable d'un groupe de production, la zone Z4 au responsable d'une unité regroupant plusieurs groupes de production tandis que la zone Z5 correspond au responsable de l'usine. À tous ces niveaux se trouve à chaque fois au moins un ordinateur 26, 28 et 30. Chacun de ces ordinateurs est relié au réseau 10 et peut aussi bien recevoir des informations qu'en transmettre.

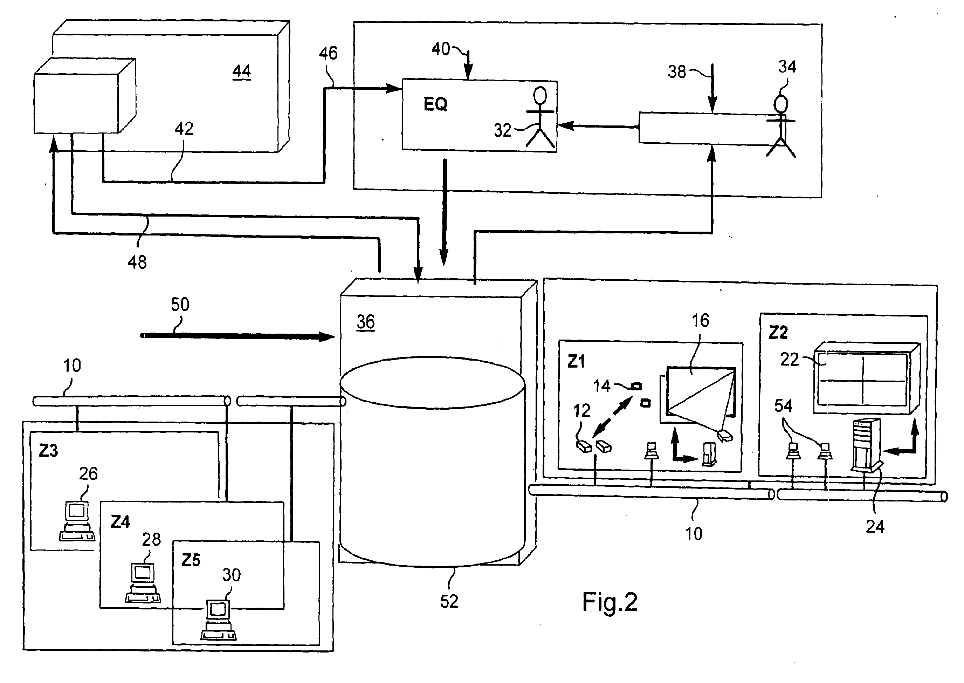

La figure 2 reprend les différentes zones Z1 à Z5 de la figure 1 avec les divers éléments représentés sur cette figure. Cette figure représente en plus schématiquement les divers dispositifs permettant de gérer ce système afin de favoriser la communication entre les divers utilisateurs de ce système. Cette meilleure communication doit permettre d'arriver à une plus grande performance dans la production. Le système doit également venir remplacer en grande partie les échanges d'informations qui se faisaient jusqu'à maintenant à l'aide d'un support papier.

Au coeur du présent système et du procédé correspondant se trouve la création de l'équilibrage. Celui-ci est réalisé essentiellement manuellement, à l'aide d'outils informatiques pour sa présentation mais pas pour sa conception. Des agents d'étude du travail 32 réalisent cette équilibrage EQ.

Des informations de toutes sortes sont nécessaires pour réaliser cet équilibrage EQ. Avant de réaliser cet équilibrage, des agents d'étude du travail 34 font d'abord le point pour connaître l'état d'avancement de la construction de l'avion 2. Ils reçoivent notamment des informations du dispositif central de gestion 36 qui centralise les diverses informations transmises notamment par les agents de fabrication de la zone Z1 comme décrit plus loin. L'agent d'étude du travail 34 peut éventuellement obtenir aussi des informations 38 d'autres sources.

L'agent d'étude du travail 32, connaissant l'état d'avancement de la construction de l'avion 2 établit alors l'équilibrage EQ à l'aide des ressources dont il dispose et des contraintes liées à la construction de l'avion.

Les ressources 40 correspondent par exemple aux effectifs prévisionnels des agents de fabrication et à la disponibilité des divers outils, au calendrier de production, au diagramme obtenu par la méthode PERT concernant la construction de l'avion, etc..

Les contraintes sont soit des contraintes dites "intérieures" 42 qui correspondent à des informations obtenues par le système de gestion 44 de l'entreprise, soit des contraintes dites "extérieures" 46 qui correspondent à des informations non gérées par le système de gestion 44. Parmi ces diverses contraintes, on peut citer les travaux réalisés par les sous-traitants, l'état de livraisons des fournisseurs et aussi tous les travaux effectués par d'autres groupes de production au sein de l'entreprise.

Le dispositif central de gestion 36 du système reçoit l'équilibrage EQ réalisé par l'équipe d'agents d'étude du travail 32. Cet équilibrage EQ constitue pour ce dispositif un élément clef. Il est établi pour une phase de montage avant la réalisation de cette phase et constitue donc un élément statique bien que, comme décrit plus loin, le procédé selon l'invention permet de le rendre dynamique.

Pour pouvoir adapter cet équilibrage, le dispositif central de gestion 36 reçoit en temps réel des informations 48 du système de gestion 44 de l'entreprise, des informations 50 concernant les ressources disponibles (effectifs nominatifs, compétences, etc.) et des contraintes tels le calendrier de production. Le réseau 10 fournit également des informations importantes au dispositif central de gestion 36. Toutes ces informations sont stockées dans une base de données 52 associée à ce dispositif.

Le dispositif central de gestion 36 compare l'information dont il dispose avec l'équilibrage EQ qui lui a été fourni. Dans la mesure où les informations reçues correspondent aux informations attendues compte tenu de l'équilibrage EQ, le dispositif central de gestion 36 n'agit pas. Par contre, lorsque les informations qu'il reçoit font apparaître une anomalie qui risque de causer un retard dans la fin de la phase de montage gérée, une alerte est donnée. Le dispositif central de gestion 36 possède en mémoire les retards admissibles pour les diverses tâches. Il faut éviter de déclencher une alerte pour quelques minutes de retard. Le retard admissible dépend notamment de la tâche et de sa position dans l'équilibrage. La tolérance est bien entendu moins grande pour une tâche se trouvant sur le chemin critique que pour une autre tâche.

Le principe est de permettre d'avoir connaissance de cette alerte à tous les niveaux de l'atelier de montage. Une alerte particulière est déclenchée auprès de la personne ayant pour mission de résoudre le problème à l'origine de l'alerte par visualisation sur son ordinateur ou son écran de visualisation d'un message particulier. L'alerte est ainsi donnée par un message visuel. Il est bien entendu également possible de prévoir une alerte sonore. L'alerte apparaît aussi sur l'écran géant 16 et sur l'écran de contrôle 22. Ainsi toute personne passant devant l'écran géant 16 est potentiellement au courant de cette alerte. Si elle est concernée elle pourra ainsi être informée même si elle ne se trouve pas à son poste de travail. Cette gestion des alertes est décrite dans la suite de la description.

Comme indiqué plus haut, chaque agent de fabrication dispose d'un "terminal" qui lui permet d'une part de visualiser des informations qui lui sont destinées et d'autre part renseigner le système sur l'avancement de son travail. Tout d'abord, il convient que l'agent de fabrication s'identifie. Cette identification est de préférence simple. Il s'agit par exemple de son matricule ou d'un autre identifiant. Après s'être identifié, l'agent de fabrication peut se connecter au système et recevoir les informations qui lui sont destinées. Jusqu'alors, ces informations lui étaient plutôt remises sous forme papier. Il sait ainsi notamment la tâche qu'il doit accomplir, comme prévue par l'équilibrage. L'agent de fabrication indique qu'il commence ou qu'il achève une opération. Pour des opérations longues, il peut être prévu d'indiquer des étapes ou un pourcentage de réalisation. L'agent de fabrication saisit également au niveau de son terminal tout problème technique qu'il rencontre. Cette saisie est importante par la suite au niveau de la traçabilité de la construction de l'avion mais surtout pour pouvoir générer une alerte et prévenir immédiatement le support métier 8 correspondant. De même, si une pièce nécessaire pour réaliser le montage est manquante, ceci est signalé au système par une saisie opérée par l'agent de fabrication. Une alerte est alors générée auprès du responsable de l'approvisionnement et éventuellement au responsable du groupe de production (zone Z3). Si un problème mettant en cause la qualité du travail survient ou est découvert, une alarme est également déclenchée par l'agent de fabrication.

Dans la zone Z2, le support métier 8 dispose de l'écran de contrôle 22 qui lui permet de suivre les actions opérées au niveau du groupe de production correspondant. Des ordinateurs 54 sont disponibles dans cette zone Z2 et offrent plusieurs fonctionnalités. Ces ordinateurs 54 permettent tout d'abord aux personnes assurant le support technique, logistique et qualité de s'identifier auprès du système. Une même équipe support métier peut être à la disposition de plusieurs groupes de production. Elle est donc amenée à travailler sur plusieurs équilibrages. Il est donc possible de sélectionner un équilibrage propre à un groupe de production. Le support métier peut alors gérer le découpage journalier de cet équilibrage. Lorsque le support métier est chargé de réaliser des opérations de contrôle qualité de tâches effectuées par des agents de fabrication, les validations des tâches peuvent être gérées à partir des ordinateurs 54. Il est également possible à ce niveau de gérer les ressources en hommes ou en matériel. Un agent de fabrication d'un groupe de fabrication peut par exemple être "prêté" à un autre groupe de fabrication en fonction des compétences nécessaires dans ces groupes de production. En ce qui concerne les alertes, il est possible d'une part d'en créer à partir de la zone Z2 lorsque, par exemple, un défaut qualité est constaté, et d'autre part de les gérer dans les cas par exemple où un problème technique, d'approvisionnement ou de qualité a été résolu. Une alerte générée au niveau de la zone Z2 peut aussi par exemple être retransmise à un niveau hiérarchique supérieur (ou inférieur).

Le grand écran 16 joue un rôle pivot dans la circulation de l'information au sein d'un groupe de production. Les divers utilisateurs (agents de fabrication, personnes du support métier, responsable de groupe de production, responsable de l'unité et éventuellement de l'usine) peuvent y consulter de l'information.

Ce grand écran 16 a pour but de représenter de façon électronique un ensemble graphique indiquant les tâches assignées aux agents d'un groupe de production. Cet affichage constitue en outre un support interactif de communication et de collaboration entre les agents de fabrication et les agents des métiers supports associés. Il permet ainsi d'obtenir, avec le reste du système, une plus grande performance dans la production en favorisant les échanges au sein des groupes de production pour régler les problèmes techniques et logistiques. De plus, un tel affichage vient remplacer un support papier qui a fait ses preuves. Enfin, cet affichage de par sa grande taille notamment, est convivial et esthétique. Ce grand écran 16, qui permet une vision globale des opérations de montage, peut également donner un aperçu de l'avancement des travaux à des clients venant observer le montage d'un avion qu'ils ont commandé.

Le grand écran 16 affiche des lignes, chacune d'elles étant associée à un agent de fabrication en fonction des affectations réalisées par les agents d'étude du travail 32. Le nombre de lignes correspond au nombre d'agents de fabrication travaillant dans le groupe de production correspondant. Chaque ligne comporte des tâches assignées aux agents de fabrications. Une tâche peut être répartie entre plusieurs agents de fabrication et peut également être répartie dans le temps. Les tâches sont positionnées en fonction de leurs dépendances, représentées sous forme de diagrammes de PERT.

Sur l'axe horizontal, le grand écran 16 représente des bandes temporelles correspondant aux tâches ainsi que des textes les accompagnant, sur une durée relativement importante pour avoir une meilleure vision globale.

L'affichage sur le grand écran 16 est dynamique. Un curseur 56 (figure 4) indique en permanence l'écoulement du temps. Celui-ci se déplace avec le temps. La position du curseur 56 permet d'estimer l'avancement global par rapport à l'équilibrage.

En variante de réalisation, on peut prévoir sur l'écran une échelle variable sur l'axe des temps (horizontal) comme illustré schématiquement sur la figure 5. Sur les bords de l'écran, l'échelle est plus petite et elle est maximale au centre de l'écran, à l'abscisse correspondant à la date à laquelle on se trouve. Plus on s'éloigne de cette date, plus l'échelle est petite. La décroissance de l'échelle peut être linéaire. Avec un tel affichage, on peut prévoir que le curseur est sensiblement immobile au centre de l'écran, sauf au début et à la fin d'un équilibrage. On réalise ainsi une compression de l'affichage sur les bords (verticaux) de l'écran.

Dans cette variante, une forme de réalisation préférée prévoit que l'affichage est décomposé en trois zones réparties horizontalement. La zone centrale est dite non déformée, avec une échelle maximale sur l'axe des temps. Les deux zones périphériques apportent quant à elles une déformation sur l'axe des temps (horizontal) et aucune déformation dans l'autre direction (verticale). Le dispositif central de gestion 36 assure la jonction entre les zones déformées et la zone centrale. Une telle représentation présente l'avantage de représenter à tout moment la totalité de l'équilibrage. Le calcul de la compression est mathématique et est basé par exemple sur les équations de projection d'une sphère sur un plan. Cette compression des bords peut aussi être basée sur une fonction logarithmique.

Le grand écran 16 indique également pour chacune des tâches représentées si cette tâche est inactive, ouverte, avancée (avec éventuellement le pourcentage d'avancement), terminée ou contrôlée.

Les alertes doivent également être représentées sur le grand écran 16. Elles doivent y être visibles de façon individuelle. Elles peuvent par exemple être animées d'un mouvement oscillatoire. Les tâches étant disposées les unes à côté des autres dans le sens horizontal, le mouvement oscillatoire est de préférence un mouvement vertical. Ainsi une alerte sur une tâche n'influe pas sur l'affichage des tâches voisines.

Pour distinguer les différentes alertes, il est par exemple possible de choisir une couleur spécifique pour chacune d'elle : le rouge est par exemple choisi pour les alertes techniques et le jaune pour les alertes logistiques. Si deux alertes de types différents surviennent sur une même tâche, on peut par exemple prévoir que la couleur de l'alerte la plus ancienne subsiste.

Une alerte peut être déclenchée par un agent de fabrication ou un agent des métiers supports. Les informations concernant l'alerte sont son type, son état et éventuellement la date à laquelle elle a été déclenchée et l'individu l'ayant déclenchée. Après avoir été déclenchée, une alerte est ensuite prise en compte puis résolue.

L'affichage sur l'écran géant peut également faire apparaître le chemin critique. Les tâches se trouvant sur ce chemin critique peuvent être signalées par une couleur particulière des tâches se trouvant sur ce chemin. On peut aussi prévoir un dispositif de commande pour faire varier l'affichage. Le chemin critique est alors par exemple affiché lorsque l'on bascule l'affichage sur une vue globale de l'équilibrage (sans déformation).

Le dispositif central de gestion 36 fonctionne à l'aide d'un logiciel qui comporte des composants visuels statiques, des composants visuels dynamiques et des composants fonctionnels.

Les composants visuels statiques sont par exemple déduits des présentations sur support papier des équilibrages de l'art antérieur. Ces composants correspondent par exemple aux tâches, aux individus, aux éléments de présentation, etc....

Les composants visuels dynamiques sont spécifiques et n'existent pas dans l'art antérieur. Il s'agit par exemple de diverses boîtes de dialogues qui sont développées tant au niveau des terminaux des agents de fabrication et des agents des métiers supports, le curseur mobile, les alertes, etc ....

Les composants fonctionnels relient entre eux les composants visuels mais n'apparaissent pas au niveau des interfaces du système. Ces composants sont par exemple un gestionnaire de sessions, un gestionnaire de temps, un gestionnaire de styles pour les différentes configurations graphiques, un bus logiciel pour communiquer avec les différentes applications, un moteur d'animation, un système de positionnement, des vues de l'équilibrage, des conteneurs pour les éléments et les individus et des phases qui regroupent les éléments graphiques entre eux.

Le gestionnaire de session est chargé de mémoriser les sessions des utilisateurs. Il est modifié par les boîtes de dialogue de connexion et de fin de connexion. Il conditionne l'affichage des interfaces de saisie des agents de fabrication et des métiers supports.

Le gestionnaire de temps a la possibilité de construire un planning en fonction de différents paramètres qui sont par exemple ici une date de début, une durée totale et des créneaux disponibles. Il gère également des signaux d'horloge à intervalles donnés (pour le déplacement du curseur par exemple).

Le gestionnaire de style permet l'affichage des entités graphiques statiques et dynamiques en fonction d'une résolution, d'un type d'application et d'un mode d'affichage.

Le moteur d'animation assure l'affichage des alertes actives et des boîtes de dialogue. Il permet de créer des enchaînements complexes portant sur des trajectoires ou des transformations géométriques des éléments affichés.

Le système de positionnement gère le placement des éléments de tâches et la navigation dans l'équilibrage. Chaque vue contient un système de positionnement.

Le bus logiciel supporte un protocole de communication entre les diverses applications, basé sur des échanges de messages textuels, distribués à des composants dynamiques.

L'ensemble d'affectation des effectifs influence le contenu des lignes, conjointement avec le gestionnaire de temps pour afficher le nom de l'agent de fabrication correspondant au créneau horaire dans lequel on se trouve.

Les interfaces des agents de fabrication et des métiers supports influencent l'affichage des éléments de tâches.

Enfin, l'équilibrage est l'élément racine qui fait cohabiter les différentes vues.

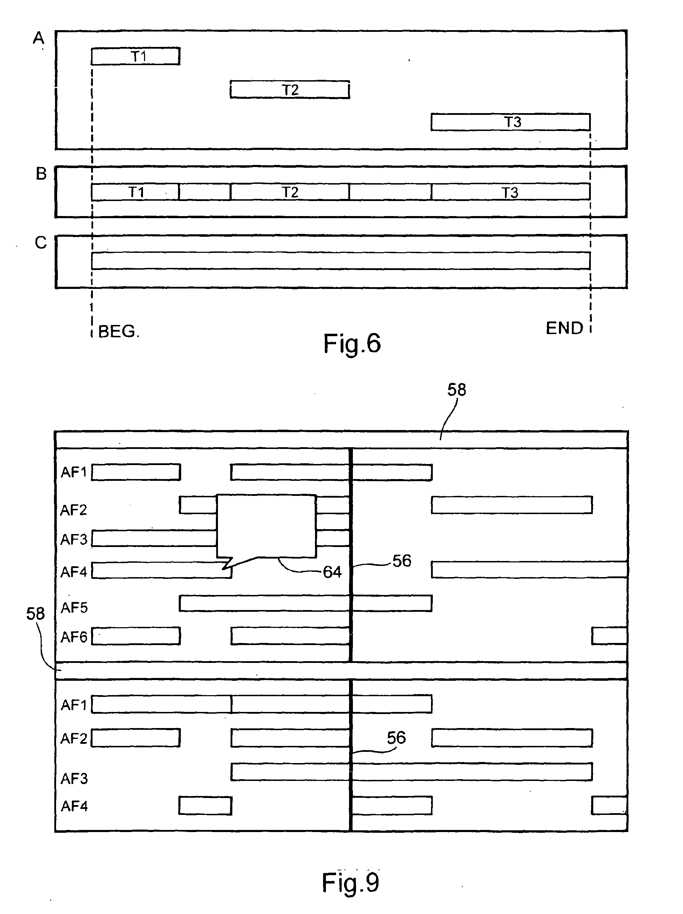

Les figures 6 à 9 illustrent des exemples d'affichage sur le grand écran 16. Des affichages tels que décrits ci-après peuvent bien entendu également être réalisés sur d'autres écrans.

Sur le grand écran 16, on prévoit généralement de représenter une tâche par ligne de l'écran. Dans certains cas, le nombre de tâches à représenter est important. Pour permettre alors d'avoir une vue plus synthétique, il est proposé de regrouper plusieurs tâches dans une famille. Toutes les tâches d'une même famille seront alors représentées sur une même ligne. Chaque tâche de l'équilibrage est généralement associée à un numéro d'ordre de fabrication. Une famille est alors associée à un ensemble d'ordres de fabrication. Ce regroupement de tâche est fait selon des considérations techniques, temporelles ou liées à la zone de montage considérée.

La figure 6 illustre le gain de place obtenu grâce à la création de familles. On considère sur le partie A de la figure 6 trois tâches T1, T2 et T3. D'après l'équilibrage, la tâche T1 commence à la date BEG., est réalisée avant la tâche T2, elle-même réalisée avant la tâche T3 qui se termine à la date END. A titre d'exemple, dans l'aéronautique, la tâche T1 concerne par exemple le montage d'un train d'atterrissage avant, la tâche T2 le montage d'un train d'atterrissage droit et la tâche T3 le montage d'un train d'atterrissage gauche. On décide alors de créer une famille concernant le montage des trains d'atterrissage. Cette famille, représentée sur la partie B de la figure 6, inclut les tâches T1, T2 et T3. Pour avoir une vue plus synthétique, la famille de tâches est représentée sur l'écran géant 16 comme une seule tâche dont le début est programmé à la date BEG. et la fin à la date END.

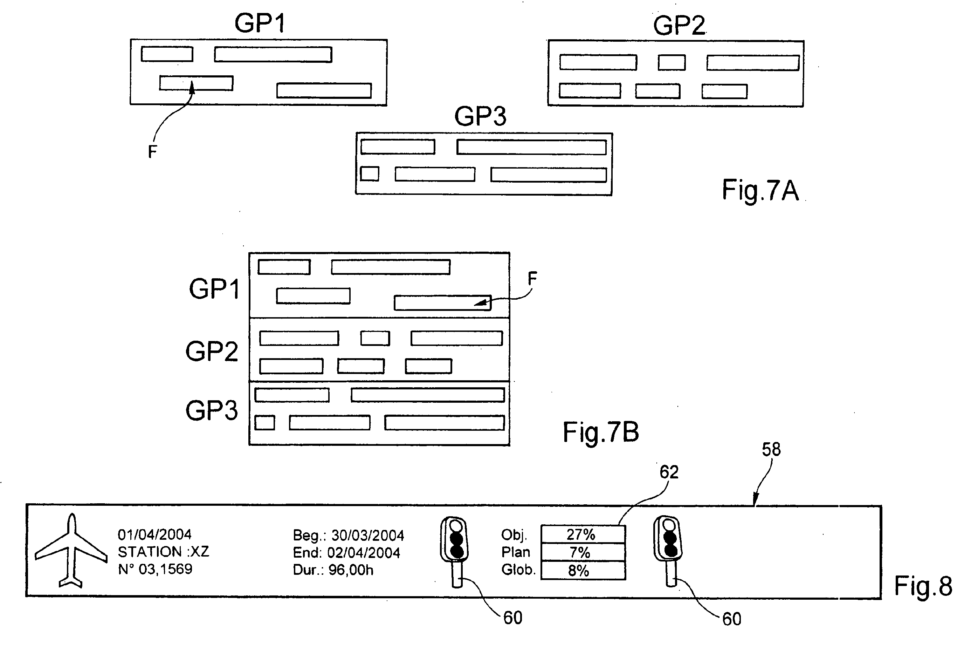

Pour obtenir une vision encore plus synthétique d'une zone de montage, il est proposé de regrouper plusieurs familles à l'intérieur d'un groupe de production. La figure 7A illustre ainsi par exemple trois groupes de production GP1, GP2 et GP3. A chacun de ces groupes de production correspondent plusieurs familles F. On suppose par exemple que ces trois groupes de production correspondent à une zone de montage. On peut alors prévoir sur le grand écran 16 d'avoir un affichage par groupe de production tel qu'illustré sur la figure 7A ou bien il est également possible de prévoir un écran de synthèse (figure 7B) regroupant les différents ensembles de familles contenus dans un équilibrage pour une même zone de montage. Avec un tel écran de synthèse, le chef de production responsable de la zone de montage peut voir où en sont les trois groupes de production en même temps. Cette visualisation n'est pas une visualisation détaillée mais permet de donner au chef de production une bonne vue synthétique des travaux dans la zone dont il est le responsable. Alors que généralement un écran géant 16 est prévu par groupe de production, on peut ici, ponctuellement, synthétiser l'information de trois (ou deux ou plus) groupes de production.

Toujours dans le but d'offrir une vue de synthèse à l'utilisateur, il est proposé ici de faire apparaître en haut de l'écran d'affichage, sur l'écran géant 16 (ou sur un autre écran d'affichage), un bandeau 58. Ce bandeau comporte des informations résumant l'état d'avancement des travaux dans le groupe de production concerné.

De gauche à droite, sur un bandeau 58, on trouve par exemple les informations décrites ci-après.

Tout d'abord, toujours dans le cas d'une construction aéronautique, un logo, symbolisé ici par un avion, peut rappeler le nom de la compagnie aérienne à laquelle l'avion construit est destiné.

A côté du logo, se trouvent sur la figure 8 une colonne dans laquelle figurent une date ainsi que d'autres informations. La date est par exemple la date, et éventuellement aussi l'heure, de rafraîchissement de l'écran. Les autres informations concernent par exemple la référence du poste de travail et le numéro d'identification de l'avion concerné.

Dans la colonne suivante se trouvent des indications concernant les opérations en cours. Dans l'exemple proposé, sont indiquées les dates de début et de fin envisagées des opérations ainsi que la durée totale prévue de ces opérations.

Le bandeau 58 comporte également, de préférence, des indicateurs 60 visuels. Un premier indicateur prend ici la forme d'un feu tricolore. Cet indicateur concerne par exemple l'état d'avancement des opérations du groupe de production concerné. L'indicateur 60 est alors par exemple au vert lorsque les opérations en cours sont en avance ou à l'heure sur le planning prévisionnel, à l'orange lorsque ces opérations sont légèrement en retard et au rouge lorsqu'un retard sensible des opérations par rapport au planning est constaté.

A droite de l'indicateur 60 visuel se trouvent des curseurs 62 qui indiquent eux également, ici de manière chiffrée, l'état d'avancement des opérations du groupe de production considéré par rapport à l'équilibrage réalisé. Les curseurs 62 sont par exemple des indicateurs d'avancement des travaux indiquant par exemple un objectif (Obj.), un état d'avancement réalisé par rapport au planifié (Plan) et un état d'avancement global (Glob.).

Le bandeau 58 représenté sur la figure 8 comporte enfin un autre indicateur 60 visuel se présentant sous la forme d'un feu tricolore. Ce deuxième indicateur 60 visuel est par exemple un indicateur de risque indiquant par exemple si par rapport au chemin critique du retard est constaté ou non.

Bien entendu, d'autres indications peuvent figurer sur le bandeau 58. On peut par exemple trouver sur ce bandeau également des menus déroulants, une légende des divers symboles utilisés ou bien encore un bouton permettant l'affichage d'une telle légende. On peut également trouver des boutons pour réaliser une compression/décompression de l'affichage réalisé, et/ou une copie/impression de l'écran, etc....

Le système de gestion de l'affichage proposé comporte également une fonction qui permet d'ouvrir une bulle 64 d'informations lorsqu'un curseur (non représenté) se déplaçant sur l'écran, commandé par exemple à l'aide d'une souris, est maintenu sur une zone de l'écran. Dans l'exemple représenté sur la figure 9, la bulle 64 d'informations donne des renseignements relatifs à la tâche sélectionnée et indique par exemple le nom de cette tâche, le nombre d'heures qui y sont affectées, son numéro d'ordre de fabrication, la référence de la gamme correspondante, les éventuelles alertes, etc.... On peut également prévoir qu'une bulle 64 apparaisse lorsque le curseur est placé sur le nom d'un agent de fabrication (AF1 à 6 sur la figure 9). La bulle 64 comporte alors des informations telles par exemple le nom de la personne correspondante, son métier, et éventuellement l'endroit où il se trouve sur l'équilibrage.

La figure 9 illustre un exemple d'affichage dans lequel deux fenêtres sont représentées sur un même écran. Chaque fenêtre comporte alors son bandeau 58 avec les informations propres de la fenêtre correspondante ainsi que son curseur 56. Dans ce cas, les curseurs 56 des deux fenêtres sont de préférence alignés l'un par rapport à l'autre.

Pour un meilleur pilotage des opérations de montage ainsi qu'une meilleure anticipation des problèmes, il est possible d'accéder aux données sources utilisées pour réaliser les divers affichages et de réaliser des tableaux sous différentes formes (graphe, diagramme bâtons, disque, etc...). Ces diverses informations peuvent être visualisées à l'écran ou bien éditées sur papier. Ainsi, les données graphiques sont retranscrites sous forme de données sources par l'intermédiaire d'un tableur, tel un tableur Excel (marque déposée), pour faciliter les analyses.

De telles analyses peuvent être par exemple effectuées avant le début des différentes opérations de montage afin d'anticiper et de prioriser les problèmes. On peut ici par exemple tenir compte des problèmes d'approvisionnement ou des problèmes liés à la gestion du personnel (absences, ...). En cours des opérations de montage, de tels graphiques permettent de suivre l'avancement des opérations de montage. Le responsable du poste de travail peut ainsi mieux piloter les opérations pour lesquelles il est responsable. Enfin, une fois les opérations de montage réalisées, les graphiques permettent d'analyser d'éventuels dysfonctionnements qui ont pu survenir. Ces dysfonctionnements peuvent être analysés pour essayer si possible qu'ils ne se reproduisent plus, ou si ce n'est pas possible, essayer d'en tenir compte dans une prochaine planification.

Toutes ces fonctions décrites plus haut permettent de rendre le dispositif décrit plus efficace car elles permettent un accès direct aux informations utiles tant en amont, qu'en aval et qu'au cours des opérations de montage. Cette meilleure gestion conduit immanquablement à des gains de temps sensibles lors des opérations de montage réalisées. Les délais de réalisation peuvent ainsi être plus facilement tenus et même réduits.

Dans les zones Z3, Z4 et Z5 se trouvent les responsables, à divers niveaux hiérarchiques, de l'atelier de montage. À chaque niveau hiérarchique se trouve un ordinateur (26, 28 et 30) relié au réseau 10. Chacun de ces ordinateurs permet par exemple de visualiser toute l'information disponible sur le grand écran 16. On prévoit également la possibilité de consulter à partir de ces ordinateurs, après identification, les informations relatives aux divers postes de travail ainsi que des indicateurs spécifiques définis en fonction du domaine d'activité et de la stratégie propre à l'entreprise.

À titre d'exemples, la hiérarchie peut consulter à tout moment des graphiques donnant l'historique jour par jour des avances/retards, les prévisions concernant les délais de livraison, les informations concernant un poste de travail particulier, les statistiques concernant les heures travaillées, les présences/absences, etc..

Il est prévu également d'envoyer des messages d'alerte à tous les niveaux hiérarchiques. Le système peut par exemple prévoir que ces messages sont envoyés uniquement par des agents des supports métiers (zone Z2). De telles alertes concernent normalement uniquement les problèmes graves survenant au cours de la fabrication et nécessitant une intervention de la hiérarchie. On peut aussi prévoir que lorsqu'un message d'alerte est envoyé par un agent de fabrication à un agent des supports métiers absent, ce message est automatiquement transféré au niveau hiérarchique supérieur (ou au premier niveau hiérarchique supérieur présent).

Le système et le procédé décrits plus haut permettent d'améliorer la communication dans un atelier de fabrication et ainsi de réaliser des gains sensibles en matière de production. Ce système permet de générer des alertes mais également de signaler simplement l'état d'avancement des tâches effectuées.

L'agent de fabrication saisit régulièrement l'état d'avancement de ses travaux. Quand une tâche est achevée, la personne chargée de contrôler le travail achevé est immédiatement prévenue. Une fois le contrôle effectué, la tâche est validée et apparaît comme telle sur l'équilibrage.

L'information circule non seulement de l'agent de fabrication vers les métiers supports mais également des métiers supports vers les agents de fabrication. Ainsi, lorsqu'une anomalie (manquant, problème technique, etc.) est signalée, la tâche concernée est signalée par une couleur spécifique et une animation (clignotement par exemple). Le problème est ensuite pris en charge par l'agent qualifié des métiers supports. Cette prise en charge est saisie. L'animation disparaît. L'agent de fabrication sait donc que le problème est traité. Par la suite, une fois le problème résolu, l'agent des métiers supports le signale au système et la tâche revient à sa couleur d'origine, informant ainsi l'agent de fabrication que le problème a été résolu.

Les alertes peuvent également être générées par le système lui-même lorsque des différences apparaissent entre l'équilibrage prévu initialement et la réalisation des tâches. Ces alertes sont alors traitées par exemple par les supports métiers.

Tous ces exemples montrent qu'une communication "fluide" est mise en place à l'aide d'un système selon l'invention. L'information est facilement accessible en tout point de la zone de fabrication. La présence de l'écran géant au niveau d'un point de passage, au "coeur" de la zone de fabrication, permet de tenir tous les agents d'un groupe de production informés de tout ce qui se passe dans l'ensemble du groupe de production. Chaque agent se sent donc plus impliqué dans le groupe et ne se considère pas comme un élément isolé. Il est ainsi valorisé.

La présente invention ne se limite pas aux différentes formes de réalisation décrites ci-dessus à titre d'exemples non limitatifs. Elle concerne également toute variante de réalisation à la portée de l'homme du métier.

Ainsi les moyens mis en oeuvre dans la description qui précède sont donnés à titre d'exemple illustratif et d'autres moyens peuvent remplir des fonctions similaires. La taille de ces moyens (écrans par exemple) peut bien entendu aussi être adaptée à l'application qui est faite de l'invention.

En ce qui concerne la gestion d'alertes, d'autres alertes que celles prévues dans la description peuvent être mises en oeuvre sans pour autant sortir du cadre de l'invention.

## Revendications

1. Système de gestion de production pour une unité de production pour laquelle un calendrier des tâches (EQ) à accomplir est établi et mémorisé dans un dispositif de gestion centralisé (36),
ledit système comportant des dispositifs électroniques individuels (12) associés chacun à un opérateur (6), des postes de contrôle (22, 24) comportant des moyens de saisie et de visualisation et un réseau (10) reliant ces dispositifs électroniques Individuels (12) et les postes de contrôle (22, 24) au dispositif de gestion centralisé (36),
système dans lequel chaque dispositif électronique individuel (12) comporte d'une part des moyens de saisie pour la saisie des tâches effectuées et de problèmes rencontrés éventuellement lors de l'exécution de ces tâches par l'opérateur (6) associé et d'autre part des moyens de transmission des informations saisies vers le dispositif de gestion centralisé (36), et
système dans lequel le dispositif de gestion centralisé (36) comporte d'une part des moyens de comparaison entre les informations reçues de la part des divers dispositifs électroniques individuels (12) et le calendrier des tâches (EQ) à accomplir mémorisé, et d'autre part des moyens pour générer une alerte lorsque les moyens de comparaison ont détecté un écart entre les informations reçues et le calendrier des tâches (EQ) à accomplir dépassant un seuil prédéterminé et mémorisé,
**caractérisé en ce que** le dispositif de gestion centralisé (36) comporte en outre des moyens de transmission d'une telle alerte vers les dispositifs électroniques individuels (12, 14) et les postes de contrôle (22, 24),
**en ce qu'**une partie au moins des dispositifs électroniques individuels (12) et des postes de contrôle (22, 24) comportent des moyens de visualisation (12, 22) permettant de visualiser des signaux d'alerte concernant non seulement l'opérateur (6) associé au dispositif électronique individuel ou au poste de contrôle mais aussi d'autres opérateurs et d'autres postes de contrôle, et
**en ce que** ledit système comporte au moins un écran (16) relié au réseau et comportant des moyens d'affichage présentant des moyens de défilement d'une image illustrant le calendrier des tâches, les moyens d'affichage étant des moyens d'affichage en deux dimensions et pour l'une des deux dimensions l'échelle utilisée variant.

2. Système selon la revendication 1, **caractérisé en ce que** les dispositifs électroniques individuels (12) sont des dispositifs portables sans fil, de type ordinateur portable.

3. Système selon l'une des revendications 1 ou 2, **caractérisé en ce que** le dispositif de gestion centralisé (36) comporte des moyens de saisie permettant de modifier le calendrier des tâches (EQ) mémorisé.

4. Système selon l'une des revendications 1 à 3, **caractérisé en ce que** l'échelle variable utilisée par les moyens d'affichage est maximale au centre de l'écran (16) et décroît vers les bords de l'écran (16).

5. Système selon l'une des revendications 1 à 4, **caractérisé en ce que** les moyens d'affichage permettent l'affichage d'un curseur et sont associés à un dispositif de commande de déplacement de ce curseur, tel par exemple une souris d'ordinateur.

6. Système selon la revendication 5, **caractérisé en ce qu'**il comporte en outre des moyens d'affichage d'informations complémentaires lorsque le curseur est positionné sur une zone de l'écran.

7. Procédé de génération d'alertes lors de l'exécution par des opérateurs (6) de tâches planifiées sur un calendrier des tâches (EQ), **caractérisé en ce qu'**il comporte les étapes suivantes ;
- préparation et mise en mémoire dans un dispositif de gestion centralisé (36) du calendrier des tâches (EQ),
- diffusion par l'intermédiaire d'un réseau (10) à chaque opérateur (6) des tâches qu'il doit accomplir,
- saisie par chaque opérateur (6) des tâches qu'il accomplit et des éventuels problèmes rencontrés,
- transmission par l'intermédiaire du réseau (10) des informations saisies par chaque opérateur au dispositif de gestion centralisé (36),
- comparaison des informations reçues avec le calendrier des tâches (EQ) mémorisé et détection d'anomalies susceptibles de nuire à la bonne exécution des tâches,
- génération d'une alerte lorsqu'une anomalie est détectée, l'ensemble des alertes générées étant affiché sur un écran (16) de grande taille à proximité de plusieurs postes de travail,
- diffusion à tout le réseau (10) de l'alerte générée, et
- affichage sur l'écran (16) d'un diagramme dont un axe représente l'axe des temps, un curseur (56) se déplaçant sur l'axe des temps, dont l'échelle est variable, pour se placer automatiquement à la date et heure actuelle.

8. Procédé selon la revendication 7, **caractérisé en ce que** les tâches à accomplir par tous les opérateurs (6) sont affichées sur l'écran (16).

9. Procédé selon la revendication 7 ou 8, **caractérisé en ce que** le curseur (56) reste sensiblement immobile et sensiblement centré sur l'écran (16), et **en ce que** l'axe des temps s'adapte à la position du curseur (56).

10. Procédé selon l'une des revendications 7 à 9, **caractérisé en ce que** les alertes se présentent sous la forme de signaux visuels apparaissant sur des moyens de visualisation (12, 16, 22).

11. Procédé selon la revendication 8, **caractérisé en ce que** plusieurs tâches sont regroupées en une famille de tâches, et **en ce que** chaque famille de tâches est affichée à l'écran (16), les tâches d'une famille de tâches affichée n'étant alors plus affichées individuellement.

12. Procédé selon l'une des revendications 8 ou 11, **caractérisé en ce que** des tâches ou familles de tâches correspondant à différents calendriers des tâches sont affichées simultanément sur un même écran (16).

13. Procédé selon la revendication 8, **caractérisé en ce que** des informations générales concernant les tâches affichées sont regroupées dans un bandeau (58) affiché sur le même écran (16).

14. Procédé selon la revendication 13, **caractérisé en ce que** des indicateurs (60, 62) sur l'avancement des tâches sont calculés et affichés sur le bandeau (58).

15. Procédé selon l'une des revendications 7 à 14, **caractérisé en ce que** les données mémorisées et saisies sont analysées et traitées par un tableur puis éditées sous forme de graphiques.

## Claims

1. Production management system for a production unit for which a schedule of tasks (EQ) to be accomplished is set up and stored In memory in a central management device (36),
said system comprising individual electronic devices (12) each associated with an operator (6), control stations (22, 24) comprising inputting and display means and a network (10) linking these individual electronic devices (12) and the control stations (22, 24) to the central management device (36),
in which system each individual electronic device (12) comprises means for inputting the tasks performed and problems possibly encountered during the execution of these tasks by the associated operator (6), and means for transmitting the input information to the central management device (36) and
in which system the central management device (36) comprises means for comparing between the information received from the various individual electronic devices (12) and the schedule of tasks (EQ) to be accomplished stored in memory, and means to generate a warning when the comparison means have detected a difference between the information received and the schedule of tasks (EQ) to be accomplished that exceeds a threshold that is predetermined and stored in memory,
**characterized in that** the central management device (36) further comprises means for transmitting such a warning to the individual electronic devices (12, 14) and the control stations (22, 24),
**In that** at least a part of the individual electronic devices (12) and control stations (22, 24) comprise display means (12, 22) permitting the display of warning signals concerning not only the operator (6) associated with the individual electronic device or the control station but also other operators and other control stations, and
**in that** said system comprises at least one screen (16) linked to the network and comprising display means having means for scrolling an image illustrating the schedule of tasks, the display means being means for display in two-dimensions and the scale used for one of the two dimensions varying.

2. System according to claim 1, **characterized in that** the individual electronic devices (12) are wireless portable devices, of the portable computer type.

3. System according to one of claims 1 or 2, **characterized in that** the central management device (36) comprises inputting means permitting modification of the schedule of tasks (EQ) stored in memory.

4. System according to one of claims 1 to 3, **characterized in that** the variable scale used by the display means is maximum in the center of the screen (16) and decreases towards the edges of the screen (16).

5. System according to one of claims 1 to 4, **characterized in that** the display means permit the display of a cursor and are associated with a control device for moving this cursor, such as, for instance, a computer mouse.

6. System according to claim 5, **characterized in that** it also comprises additional information display means when the cursor is positioned on an area of the screen.

7. Process for generating warnings during the execution by operators (6) of tasks planned on a schedule of tasks (EQ) **characterized in that** it comprises the following steps:
- preparation and storage in memory In a central management device (36) of the schedule of tasks (EQ).
- transmittal through a network (10) to each operator (6) of the tasks that he must accomplish;
- input by each operator (6) of the tasks that he accomplishes and the problems possibly encountered,
- transmittal through a network (10) of the information input by each operator to the central management device (36),
- comparison of the information received with the schedule of tasks (EQ) stored in memory and detection of anomalies that may adversely affect the proper execution of the tasks;
- generation of a warning when a problem is detected, all of the warnings generated being displayed on a large-sized screen (16) near several workstations.;
- transmittal throughout the network (10) of the generated warning, and
- display on the screen (16) of a diagram for which one axis represents the time axis, a cursor (56) moving on the time axis, of which the scale is variable, to position itself automatically on the present date and time.

8. Process according to claim 7, **characterized in that** the tasks to be accomplished by all the operators (6) are displayed on the screen (16).

9. Process according to claim 7 or 8, **characterized in that** the cursor (56) remains substantially immobile and substantially centered on the screen (16) and **in that** the time axis adjusts itself to the position of the cursor (56).

10. Process according to one of claims 7 to 9, **characterized in that** warnings take the form of visual signals appearing on display means (12, 16, 22).

11. Process according to claim 8, **characterized in that** several tasks are grouped into a family of tasks, and **in that** each family of tasks is displayed on the screen (16); the tasks of a displayed family of tasks then no longer being displayed individually.

12. Process according to one of claims 8 or 11, **characterized in that** the tasks or families of tasks corresponding to different schedules of tasks are displayed simultaneously on the same screen (16).

13. Process according to claim 8, **characterized in that** general information concerning the tasks displayed is grouped in a banner (58) displayed on the same screen (16).

14. Process according to claim 13, **characterized in that** indicators (60, 62) about the progress of the tasks are calculated and displayed on the banner (58).

15. Process according to one of claims 7 to 14, **characterized in that** the data stored in memory and input are analyzed and processed by a spreadsheet, then issued or output in the form of graphics.

## Patentansprüche

1. Produktionsverwaltungssystem für eine Produktionseinheit, für die ein Zeitplan der zu erfüllenden Aufgaben (EQ) erstellt ist und in einer zentralen Verwaltungsvorrichtung (36) gespeichert ist,
wobei dieses System jeweils einem Operator (6) zugeordnete elektronische Einzelvorrichtungen (12), Kontrollstationen (22, 24), die Eingabe- und Visualisierungsmittel umfassen, und ein Netz (10) umfasst, das die elektronischen Einzelvorrichtungen (12) und die Kontrollstationen (22, 24) mit der zentralen Verwaltungsvorrichtung (36) verbindet,
wobei in diesem System jede elektronische Einzelvorrichtung (12) einerseits Eingabemittel zum Eingeben der erledigten Aufgaben und ggf. bei der Ausführung dieser Aufgaben von dem zugeordneten Operator angetroffenen Problemen und andererseits Mittel zur Übertragung der eingegebenen Informationen zur zentralen Verwaltungsvorrichtung (36) umfasst und
wobei in diesem System die zentrale Verwaltungsvorrichtung (36) einerseits Mittel zum Vergleich zwischen den von Seiten der verschiedenen elektronischen Einzelvorrichtungen (12) empfangenen Informationen und dem gespeicherten Zeitplan der zu erfüllenden Aufgaben (EQ) und andererseits Mittel zur Erzeugung eines Alarms umfasst, wenn die Vergleichsmittel eine Abweichung zwischen den empfangenen Informationen und dem Zeitplan der zu erfüllenden Aufgaben (EQ) erfasst haben, die eine vorbestimmte und gespeicherte Schwelle überschreitet,
**dadurch gekennzeichnet, dass** die zentrale Verwaltungsvorrichtung (36) außerdem Mittel zur Übertragung eines solchen Alarms zu den elektronischen Einzelvorrichtungen (12, 14) und den Kontrollstationen (22, 24) umfasst,
dass mindestens ein Teil der elektronischen Einzelvorrichtungen (12) und der Kontrollvorrichtungen (22, 24) Visualisierungsmittel (12, 22) umfasst, die die Visualisierung der Alarmsignale gestatten, die nicht nur den der elektronischen Einzelvorrichtung oder der Kontrollstation zugeordneten Operator (6), sondern auch andere Operatoren und andere Kontrollstationen betreffen, und
dass das System mindestens einen Bildschirm (16) umfasst, der mit dem Netz verbunden ist und Anzeigemittel umfasst, die Mittel zum Ablaufen eines den Zeitplan der Aufgaben darstellenden Bildes aufweisen, wobei die Anzeigemittel Mittel zur zweidimensionalen Anzeige sind und wobei bei einer der beiden Dimensionen der verwendete Maßstab variiert.

2. System nach Anspruch 1, **dadurch gekennzeichnet, dass** die elektronischen Einzelvorrichtungen (12) tragbare drahtlose Vorrichtungen vom Typ tragbarer Rechner sind.

3. System nach einem der Ansprüche 1 oder 2, **dadurch gekennzeichnet, dass** die zentrale Verwaltungsvorrichtung (36) Eingabemittel umfasst, die die Änderung des gespeicherten Zeitplans der Aufgaben (EQ) gestatten.

4. System nach einem der Ansprüche 1 bis 3, **dadurch gekennzeichnet, dass** der von den Anzeigemitteln verwendete variable Maßstab in der Mitte des Bildschirms (16) maximal ist und auf die Ränder des Bildschirms (16) zu abnimmt.

5. System nach einem der Ansprüche 1 bis 4, **dadurch gekennzeichnet, dass** die Anzeigemittel die Anzeige eines Cursors gestatten und einer Vorrichtung zur Steuerung der Bewegung dieses Cursors, wie zum Beispiel einer Rechnermaus, zugeordnet sind.

6. System nach Anspruch 5, **dadurch gekennzeichnet, dass** es außerdem Mittel zur Anzeige von ergänzenden Informationen umfasst, wenn der Cursor auf einer Zone des Bildschirms positioniert ist.

7. Verfahren zur Erzeugung von Alarmen bei der Ausführung von auf einem Zeitplan der Aufgaben (EQ) geplanten Aufgaben durch Operatoren, **dadurch gekennzeichnet, dass** es die folgenden Schritte umfasst:
- Erstellung und Speicherung des Zeitplans der Aufgaben (EQ) in einer zentralen Verwaltungsvorrichtung (36),
- Sendung der Aufgaben, die jeder Operator (6) erfüllen muss, über ein Netz (10) zu jedem Operator (6),
- Eingabe der Aufgaben, die jeder Operator (6) erfüllt, und der ggf. angetroffenen Probleme durch jeden Operator (6),
- Übertragung der von jedem Operator eingegebenen Informationen über das Netz (10) zu der zentralen Verwaltungsvorrichtung (36),
- Vergleich der empfangenen Informationen mit dem gespeicherten Zeitplan der Aufgaben (EQ) und Erfassung von Anomalien, die der guten Ausführung der Aufgaben schaden könnten,
- Erzeugung eines Alarms, wenn eine Anomalie erfasst wird, wobei alle erzeugten Alarme auf einem Bildschirm (16) mit großen Abmessungen in Nähe von mehreren Arbeitsplätzen angezeigt werden,
- Sendung des erzeugten Alarms auf dem ganzen Netz (10) und
- Anzeige auf dem Bildschirm (16) eines Diagramms, dessen eine Achse die Zeitachse darstellt, wobei ein Cursor (56) sich auf der Zeitachse, deren Maßstab variabel ist, bewegt, um sich automatisch auf dem aktuellen Datum und auf der aktuellen Uhrzeit zu positionieren.

8. Verfahren nach Anspruch 7, **dadurch gekennzeichnet, dass** die von allen Operatoren (6) zu erfüllenden Aufgaben auf dem Bildschirm (16) angezeigt werden.

9. Verfahren nach Anspruch 7 oder 8, **dadurch gekennzeichnet, dass** der Cursor (56) im Wesentlichen unbeweglich und im Wesentlichen auf dem Bildschirm (16) zentriert bleibt und dass die Zeitachse sich an die Position des Cursors (56) anpasst.

10. Verfahren nach einem der Ansprüche 7 bis 9, **dadurch gekennzeichnet, dass** die Alarme in der Form von Sichtsignalen vorliegen, die auf Visualisierungsmitteln (12, 16, 22) erscheinen.

11. Verfahren nach Anspruch 8, **dadurch gekennzeichnet, dass** mehrere Aufgaben zu einer Familie von Aufgaben zusammengefasst sind und dass jede Familie von Aufgaben auf dem Bildschirm (16) angezeigt wird, wobei die Aufgaben einer angezeigten Familie von Aufgaben nun nicht mehr einzeln angezeigt werden.

12. Verfahren nach einem der Ansprüche 8 oder 11, **dadurch gekennzeichnet, dass** Aufgaben oder Familien von Aufgaben, die verschiedenen Zeitplänen der Aufgaben entsprechen, gleichzeitig auf ein und demselben Bildschirm (16) angezeigt werden.

13. Verfahren nach Anspruch 8, **dadurch gekennzeichnet, dass** allgemeine Informationen, die die angezeigten Aufgaben betreffen, in einem auf demselben Bildschirm (16) angezeigten Band (58) zusammengefasst werden.

14. Verfahren nach Anspruch 13, **dadurch gekennzeichnet, dass** Indikatoren über den Fortgang der Aufgaben errechnet und auf dem Band (58) angezeigt werden.

15. Verfahren nach einem der Ansprüche 7 bis 14, **dadurch gekennzeichnet, dass** die gespeicherten und eingegebenen Daten durch ein Tabellenkalkulationsprogramm analysiert und verarbeitet werden und dann in Form von Graphiken editiert werden.
